# EUROPÄISCHE PATENTSCHRIFT

(11) **EP 1 552 281 B1**
(45) Veröffentlichungstag und Bekanntmachung des Hinweises auf die Patenterteilung: **31.08.2016**
(21) Anmeldenummer: 03797179.3
(22) Anmeldetag: 16.09.2003
(51) Int. Cl.: G01N 21/64

(54) **BESTIMMUNG DER EIGNUNG EINES OPTISCHEN MATERIALS ZUR HERSTELLUNG VON OPTISCHEN ELEMENTEN, EINE VORRICHTUNG HIERZU UND DIE VERWENDUNG DES MATERIALS**
DETERMINING THE SUITABILITY OF AN OPTICAL MATERIAL FOR THE PRODUCTION OF OPTICAL ELEMENTS, CORRESPONDING DEVICE, AND USE OF SAID MATERIAL
PROCEDE POUR DETERMINER LE DEGRE D'ADAPTATION D'UN MATERIAU OPTIQUE POUR PRODUIRE DES ELEMENTS OPTIQUES, DISPOSITIF CORRESPONDANT ET UTILISATION DUDIT MATERIAU

(30) Priorität: 16.09.2002 DE 10242934; 02.08.2003 DE 10335456
(43) Veröffentlichungstag der Anmeldung: 13.07.2005
(73) Patentinhaber: Hellma Materials GmbH & Co. KG, 07745 Jena (DE)
(72) Erfinder: MÜHLIG, Christian, 07749 Jena (DE); TRIEBEL, Wolfgang, 07751 Jena-Cospeda (DE); ALKEMPER, Jochen, 55270 Kleinwinternheim (DE); MARTIN, Regina, 07745 Jena (DE)
(74) Vertreter: Fritzsche, Thomas
(86) Internationale Anmeldenummer: PCT/DE2003/003069
(87) Internationale Veröffentlichungsnummer: WO 2004/027395

(56) Entgegenhaltungen:
- WO-A-02/48694
- US-A1- 2001 043 331
- TRIEBEL W ET AL: "Evaluation of fused silica for DUV laser applications by short-time diagnostics" PROCEEDINGS OF THE SPIE - THE INTERNATIONAL SOCIETY FOR OPTICAL ENGINEERING SPIE-INT. SOC. OPT. ENG USA, Bd. 4103, 2000, Seiten 1-11, XP002300940 ISSN: 0277-786X in der Anmeldung erwähnt

## Beschreibung

Die Erfindung betrifft ein Verfahren zur Bestimmung der Eignung eines optischen Materials für die Herstellung von optischen Elementen, eine Vorrichtung zur Durchführung des Verfahrens sowie die Verwendung der mit dem Verfahren bestimmten optischen Materialien.

Es ist bekannt, dass Materialien, aus denen optische Elemente hergestellt werden, ein sie durchstrahlendes Licht mehr oder weniger absorbieren, so dass die Intensität des Lichts bzw. einer Strahlung nach Durchtritt durch ein optisches Element regelmäßig geringer ist als zuvor. Dabei ist es auch bekannt, dass das Ausmaß dieser Absorption abhängig von der Wellenlänge des Lichtes ist. Für optische Systeme d. h. für optisch transparente Systeme wird jedoch angestrebt, die Absorption möglichst gering zu halten, d.h. diese sollen, zumindest für die jeweilige Arbeitswellenlänge eine hohe Lichtdurchlässigkeit bzw. Transmission aufweisen. Dabei setzt sich die Absorption aus materialspezifischen (intrinsischen) Anteilen und solchen Anteilen zusammen, die auf sog. nicht-intrinsische Anteile, wie z. B. Einschlüsse, Verunreinigung und/oder Kristallfehler, zurückzuführen sind. Während die intrinsische Absorption von der jeweiligen Qualität des Materials unabhängig ist, führt die zusätzliche Strahlungsabsorption der nicht-intrinsischen Absorption zu einem Qualitätsverlust des optischen Materials.

Sowohl durch die intrinsische als auch durch die nicht-intrinsische Absorption wird Energie im optischen Material deponiert, was zu einer Erwärmung führt. Eine derartige Erwärmung des Materials hat zum Nachteil, dass sich die optischen Eigenschaften z. B. der Brechungsindex ändern, was z. B. in einem zur Strahlformung verwendeten optischen Bauteil zu einer Änderung der Abbildungsverhältnisse führt, da die Brechzahl nicht nur von der Wellenlänge des Lichtes sondern auch von der Temperatur des optischen Materials abhängt. Darüber hinaus führt eine Erwärmung in einem optischen Bauteil auch zu einer Änderung der Linsengeometrie. Diese Phänomene erzeugen eine Änderung des Linsenbrennpunktes, bzw. eine Unschärfe bei mit der erwärmten Linse projektierten Abbildungen. Dies führt insbesondere in der Photolithographie, wie sie zur Herstellung von Computerchips und elektronischen Schaltungen verwendet wird, zu einer Qualitätsverschlechterung bzw. zu einer Erhöhung des Ausschusses und ist somit unerwünscht.

Druckschrift WO 02/48694 A offenbart ein interessantes Verfahren zur Bestimmung der Qualität eines optischen Materials. Bei vielen Materialien wird ein Teil der absorbierten Strahlung nicht nur in Wärme umgewandelt, sondern auch in Form von Fluoreszenz wieder abgegeben. Die Ausbildung der Fluoreszenz an optischen Materialien, insbesondere an optischen Kristallen, ist an sich bekannt. So beschreiben beispielsweise W. Triebel et al. in (Proceedings SPIE Vol. 4103, S. 1-11, 2000 Triebel, Bark-Zollmann, Mühlig et al. in "Evaluation of Fused Silica for DUV Laser Applications by Short Time Diagnostics") die Entstehung und Messung von Laserinduzierter Fluoreszenz (LIF) in Quarz insbesondere in OHreichem Quarz bzw. einer Glasmatrix. Des weiteren beschreiben M. Mizuguchi et al. in J. Vac. Sci. Technol. A., Vol. 16, Seite 2052 - 3057 (1998) die Ausbildung von optischen Absorptionsbanden in einem Calciumfluorid-Kristall. Des weiteren beschreibt M. Mizuguchi et al. in J. Opt. Soc. Am. B, Vol. 16, Seite 1153 - 1159, Juli 1999 eine Zeit-aufgelöste Photolumineszenz zur Diagnose des Laserschadens an einem Calciumfluorid-Kristall. Dort wird die Ausbildung von Photolumineszenz bildenden Farbzentren durch Anregung mit einem ArF-Excimer-Laser bei 193 nm beschreiben. Damit derartige Messungen jedoch möglich sind, werden hier Kristalle mit relativ hohen Verunreinigungen verwendet, die den hohen Anforderungen der Photolithographie nicht genügen. Darüber hinaus wird die Fluoreszenzmessung nach einer Wartezeit von 50 nsec. nach Beendigung des Laserimpulses in der zu untersuchenden Probe durchgeführt. Es hat sich nun gezeigt, dass die so erhaltenen Fluoreszenzwerte nicht zur Qualitätskontrolle bzw. zur Bestimmung des Ausmaßes der Verunreinigung, und damit auch zur Ausbildung von Farbzentren in den Kristallen hoher Qualität verwenden lassen.

Es wird daher die Auffassung vertreten, dass sich die Bestimmung der Strahlungs-induzierten Fluroeszenz, insbesondere der Laser-induzierten Fluoreszenz nicht zur Qualitätskontrolle von hochqualitativen optischen Materialien, wie beispielsweise hochreinem Calciumfluorid für die Photolithographie verwenden lässt. (Siehe auch Vortrag Dr. Mann, Laserlabor Göttingen, SPIE Konferenz in Seattle, USA, Juli 2002). Es wurde festgestellt, dass eine Korrelation zwischen der Laser-induzierten Fluoreszenz und einer Aussage über Verunreinigungen bzw. die optische Qualität eines Materials nicht möglich ist.

Die Erfindung hat nun zum Ziel, einen Test bereitzustellen, mit dem ein optisches Material auf seine Eignung zur Verwendung als optisches Element getestet werden kann, und zwar generell für die Verwendung bei bestimmten Arbeitswellenlängen. Dabei soll der Test leicht und ohne großen apparativen Ausbau durchführbar sein. Schließlich soll der Test möglichst untergrundfrei durchführbar sein, d. h. die Ergebnisse sollen möglichst keine Untergrundeffekte enthalten und mit sehr hoher Sensitivität durchführbar sein. Darüber hinaus sollen auch in Kristallen hoher Qualität noch die Störung von nur in geringen Mengen vorliegenden, chemisch nicht mehr oder nur-sehr schwer nachweisbaren Verunreinigungen möglichst selektiv bestimmbar und der jeweiligen verunreinigenden Substanz zuordenbar sein.

Außerdem soll mit dem Verfahren die Menge und Art der Verunreinigung ohne aufwändige Kalibrierung an der jeweiligen Probe unabhängig von der Probengröße bestimmbar sein.

Alle diese Ziele werden durch das in den Ansprüchen definierte Verfahren sowie der Vorrichtung erreicht.

Erfindungsgemäß wurde nämlich gefunden, dass sich die zuvor beschriebenen Probleme des Standes der Technik dadurch vermeiden lassen, wenn man die nicht-intrinsische Fluoreszenz bereits während der Anregung mit Licht und/oder unmittelbar nach Beendigung eines Lichtimpulses, d. h. nachdem der Lichtimpuls die Probe durchlaufen hat, ermittelt. Es hat sich nämlich gezeigt, dass bei den Messungen gemäß dem Stand der Technik die nicht-intrinsischen Fluoreszenzen wegen ihrer kurzen im Nanosekunden-Bereich liegenden Lebensdauer bereits stark abgeklungen sind. Aus diesem Grund enthalten diese Messungen nur noch relativ geringe nicht-intrinsische Fluoreszenzsignale.

Dies wird mit dem erfindungsgemäßen Verfahren vermieden und eine Optimierung der nicht-intrinsischen Fluoreszenzsignale erreicht. Die strahlungsinduzierte Absorption insbesonders die durch Fehler bzw. Verunreinigungen hervorgerufene Absorption kann so auf einfache Weise charakterisiert werden.

In einer erfindungsgemäßen bevorzugten Ausführungsform wird neben der nicht-intrinsischen Fluoreszenz zur Normierung auch die intrinsische Fluoreszenz bestimmt. Da nämlich die intrinsische Fluoreszenz eine Materialkonstante darstellt, lässt sich aus dem Größenverhältnis von nicht-intrinsischer zu intrinsischer Fluoreszenz die nicht-intrinische Bande normieren und so rasch ermitteln, ob das getestete optische Material für die Weiterverarbeitung zu einem optischen Element wie beispielsweise einer Linse, Prismen etc. geeignet ist. Darüber hinaus kann aus diesem Verhältnis an Hand einer einfachen Eichkurve jederzeit die Menge der jeweiligen Verunreinigung ermittelt werden, ohne dass aufwändige Kalibrierungen, z. B. Dimensionsbestimmungen etc. an der zu untersuchenden Probe notwendig sind.

Zur Durchführung des erfindungsgemäßen Verfahrens werden vorzugsweise nicht-intrinsische Fluoreszenzbanden verwendet. Bevorzugte nicht-intrinsische Banden sind diejenigen bei der Wellenlänge 313 nm, 333 nm, 365 nm, 420 nm, 450 nm, 500 nm, 580 nm, 740 nm und 225 nm. Es wurde gefunden, dass die Fluoreszenzwellenlänge 225 nm lediglich bei der Bestrahlung mit einer Wellenlänge von 157 nm (F₂-Laser) erzeugt wird, wobei diese nicht in jedem Material aufzufinden ist. Ganz besonders bevorzugt ist jedoch die Bestimmung der Fluoreszenz der Wellenlänge bei 580 und/oder 740 nm. Diese Fluoreszenzbanden sind üblicherweise aufzufinden und haben sich als besonders empfindlich im erfindungsgemäßen Verfahren erwiesen. Besonders kritisch ist auch die Fluoreszenz bei 450 nm. Diese Bande zeigt sich jedoch nicht so sensitiv gegenüber der Fluenz bzw. eingestrahlten Energiedichte, hat jedoch einen merklich großen Einfluß auf die Anfangstransmission Tₒ. Erfindungsgemäß wird beim Auftreten einer intrinsischen Fluoreszenzbande diese zur Normierung der nicht-intrinsischen Fluoreszenz verwendet. Zur Normierung wird vorzugsweise die intrinsische Fluoreszenzbande bei 278 nm verwendet. Es hat sich gezeigt, dass diese Bande frei ist von anderen nicht-intrinsischen Bestandteilen. Aus diesem Grund ist sie besonders gut zur Normierung geeignet. Die Normierung der Höhe der gemessenen nicht-intrinsischen Fluoreszenzbande oder-banden erfolgt durch Bildung des Verhältnisses von nicht-intrinsischer zu intrinischer Fluoreszenz. Ganz besonders bevorzugt wird im erfindungsgemäßen Verfahren die nichtintrinsische Fluoreszenz synchron zum eingestrahlten Laserimpuls ermittelt.

Es hat sich als besonders zweckmäßig erwiesen, vor Durchführung des erfindungsgemäßen Verfahrens das zu bestimmende Material mittels einer Vorbestrahlung zu behandeln. Dabei wird mit einer vorbestimmten Anzahl von Laserimpulsen der Absorptionszustand des Materials bezüglich der sog. rapid damage bzw. des sog. rapid annealing gesättigt, so dass die darauf folgenden Messungen jeweils von einem gleichmäßigen Grundniveau aus erfolgen. Übliche Pulsmengen betragen beispielsweise für ArF-Laser (193 nm) mindestens 3000, vorzugsweise mindestens 6000, und bei einer Bestrahlungswellenlänge von 157 nm (F₂-Laser) 30.000, vorzugsweise 70.000 - 200.000 Laserpulse. Prinzipiell ist es zur Durchführung des erfindungsgemäßen Verfahrens notwendig, dass jeweils mit möglichst vergleichbaren Energiedichten in das zu untersuchende Material eingestrahlt wird. Vorzugsweise wird das Verfahren auch nicht nur mit der gleichen oder vergleichbaren Energiedichte durchgeführt, sondern vorzugsweise auch bei gleichen Anregungs- und Fluoreszenz-Wellenlängen, um vergleichbare Werte insbesondere Spektren zu erhalten.

Mit dem erfindungsgemäßen Verfahren ist es auch möglich, die Eignung eines optischen Materials für jede beliebige Anregungswellenlänge zu testen und zwar bereits vor jeglicher Weiterverarbeitung zu einem optischen Element oder Baustein. So ist es z. B. möglich, die exakte intrinsische Fluoreszenz bei einer Anregungswellenlänge von 193 nm und 157 nm zu bestimmen und diese bei der Ermittlung der nicht-intrinsischen Fluoreszenz zu berücksichtigen, und so das optische Material je nachdem zur Verwendung für die eine oder die andere Wellenlänge als geeignet zu klassifizieren.

Schließlich ist aus dem Fluoreszenzspektrum die Art der Vierunreinigungen auch noch bei Mengen im ppb-Bereich problemlos feststellbar. Aus dem Verhältnis von intrinsischer zu nicht-intrinsischer Fluoreszenz ist ebenfalls die Menge der Fluoreszenz erzeugenden Verunreinigung ermittelbar. Übliche verunreinigende Materialien sind Seltene Erden und insbesonders Cer, Europium, Terbium, Natrium und auch oxidischer Sauerstoff.

Erfindungsgemäß ist es bevorzugt, das Bestimmungsverfahren mit UV-Licht und insbesondere tiefem UV-Licht durchzuführen. Dabei haben sich Wellenlängen unterhalb 250 nm, insbesonders unterhalb 200 nm als zweckmäßig erwiesen, wobei Wellenlängen zwischen 100 bzw. 150 nm und 200 nm besonders bevorzugt sind. Zweckmässigerweise wird das Verfahren mit derjenigen Anregungswellenlänge durchgeführt, mit der das optische Material beim späteren Gebrauch durchstrahlt werden soll. Eine bevorzugte Strahlungsquelle für das energiereiche Licht ist ein Laser, wobei Laserimpulse mit Arbeitswellenlängen von 193 und/oder 157 nm bevorzugt sind.

Im erfindungsgemäßen Verfahren wird die nicht-intrinsische Fluoreszenz vorzugsweise mittels einem Gitterspektrograph und einer I-CCD-Kamera mit einstellbaren Belichtungsintervalen (Intensified charged coupled device) gemessen, wobei es bevorzugt ist das dabei erhaltene Spektrum rechnergesteuert zu verarbeiten. Derartige Messungen und Vorrichtungen sind dem Fachmann bekannt und beispielsweise von W. Triebel et al. in Proceedings SPIE Vol. 4103, S. 1-11, 2000, "Evaluation of Fused Silica for DUV Laser Applications by Short Time Diagnostics") oder auch von Mizuguchi et al. in J. Opt. Soc. Am. B, Vol. 16 1153 ff. (Juli 1999) beschrieben.

Erfindungsgemäß ist es besonders bevorzugt, zwischen der zu untersuchenden, fluoreszierenden Probe und der Fluoreszenz-Meßeinrichtung eine Sperreinrichtung anzuordnen, welche den Durchtritt der üblicherweise energiereichen Anregungsstrahlung verhindert. Derartige Sperreinrichtungen, die beliebige Anregungswellenlängen ausblenden sind dem Fachmann bekannt. Die Ausblendung kann dabei auf vielfältige Art und Weise erfolgen. Eine Möglichkeit ist beispielsweise die Ausblendung dieser Wellenlängen mittels einem vor der CCD-Kamera angeordneten Gitterspektrographen, welcher das aufgenommene Licht in seine verschiedenen Wellenlängen aufteilt. Durch entsprechende Anordnung bzw. Drehung des Spektrographen ist es möglich, die von einer energiereichen Strahlungsquelle ausgesonderte Anregungsstrahlung abzublocken oder abzulenken. Prinzipiell ist es auch möglich, den Gitterspektrographen der CCD-Kamera selbst zu drehen.

Eine weitere Möglichkeit besteht in der Verwendung von wellenlängenspezifischen Filtern wie z. B. dielektrischen Dünnschichtfiltern, die heute ebenfalls selektiv für beliebige Wellenlängen herstellbar sind. Derartige Filter werden üblecherweise dadurch hergestellt, dass auf ein Trägermaterial eine entsprechende mehrschichtige Spiegelschicht aufgetragen wird, welche den Durchtritt der unerwünschten Wellenlängen verhindert.

Solche Schichtenfilter sind im erfindungsgemäßen Verfahren bevorzugt. Es ist jedoch notwendig, dass die verwendeten Filter keine durch das auftreffende Licht erzeugte Eigenfluoreszenz aufweisen, damit die Meßergebnisse nicht verfälscht werden.

Mit dem erfindungsgemäßen Verfahren ist es nunmehr auch möglich Fluoreszenzen zu bestimmen, deren Wellenlängen nahe der Anregungswellenlänge liegen. Dies ist für die Verwendung von optischen Elementen in der Photolithographie von besonderer Bedeutung, da die Energie derartiger Fluoreszenzwellenlängen ebenfalls ausreicht den Photolack eines Wafers zu belichten, was zu einem starken Kontrastverlust des auf den Wafer projizierten Schaltmusters führt.

Die erfindungsgemäße Bestimmung der Fluoreszenz erfolgt insbesonders innerhalb bzw. unmittelbar nach einem Belichtungsintervall am Material. Sie erfolgt vorzugsweise innerhalb eines Zeitabschnitts nach Ende der Materialbelichtung, der den jeweiligen charakteristischen Abklingkurven bzw. Lebensdauern der verschiedenen nicht-intrinisischen Fluoreszenzen entspricht bzw. daran angepasst ist. In einer Vielzahl von Fällen haben sich 90%, insbesonders 80%, oft auch 70% der Abklingzeit zur Messung als zweckmässig erwiesen. Bei einigen, bevorzugten optischen Materialien wird das erfindungsgemäße Verfahren bzw. die Bestimmung innerhalb eines Zeitraumes bzw. Zeitabschnittes von weniger als 50 nsec. nach Beendigung der Bestrahlung bzw. des Bestrahlungsimpulses im Material durchgeführt, wobei die Bestimmungen bis zu max. 40 vorzugsweise bis zu max. 30 nsec. besonders bevorzugt sind. In einigen Fällen haben sich sogar Messungen innerhalb einer Zeit von weniger als 15 nsec als zweckmässig erwiesen, nachdem der Strahlungsimpuls das Material durchlaufen hat.

Von den im erfindungsgemäßen Verfahren verwendeten CCD-Kameras sind sogenannte OMAs (Optical Multichannel Analyzer bzw. intensivierte optische Vielkanalanalysatoren) insbesonders mit einstellbaren Belichtungs- bzw. Messintervallen bevorzugt. Eine derartige Kamera weist eine Nachweisgrenze von weniger als 10 Photonen auf und ermöglicht so geringe Belichtungszeiten wie beispielsweise 10 nsec. bzw. sogar bis zu 150 psec. Derartige Kameras sind unter anderem beispielsweise von Roper Scientific, USA kommerziell erhältlich.

Das erfindungsgemäße Verfahren ist für beliebige optische Materialien geeignet, die unter Bestrahlung eine Fluoreszenz entwickeln, wobei jedoch kristallines optisches Material insbesondere halogenidische bzw. fluoridische Einkristalle bevorzugt sind. Besonders bevorzugt sind Alkali- und/oder Erdalkalifluoride, wobei Kalziumfluorid, Bariumfluorid, Strontiumfluorid, Lithiumfluorid, Kaliumfluorid, Natriumfluorid und/oder Magnesiumfluorid sowie Mischung wie z. B. KMgF₃ ganz besonders bevorzugt sind.

Die Erfindung betrifft auch eine Vorrichtung zur Durchführung eines besonders bevorzugten erfindungsgemäßen Verfahrens. Eine solche Vorrichtung umfasst eine Strahlungsquelle zur Aussendung einer Anregungsstrahlung, einer Probenhalterung zur Aufnahme einer zu bestimmenden Materialprobe, sowie eine Einrichtung zur Bestimmung einer durch die Anregungsstrahlung in der Materialprobe induzierten Fluoreszenz. Die Anregungsstrahlung verläuft entlang eines üblicherweise linearen Strahlungsganges ausgehend der von der Strahlungsquelle durch die Materialprobe und mündet vorzugsweise in einer Referenz-Photodiode. Erfindungsgemäß ist die Fluoreszenzbestimmungseinrichtung außerhalb dieses Strahlenganges angeordnet, sodass keine Anregungsstrahlung direkt in die Fluoreszenzbestimmungseinrichtung treffen kann. Vorzugsweise ist dabei die Einrichtung so angeordnet, dass die zu messende Fluoreszenz einen Fluoreszenzstrahlengang beschreibt, der senkrecht zum Anregungsstrahlengang verläuft. Die Fluoreszenz-Meßeinrichtung umfasst üblicherweise eine oder mehrere optische Linsen, welche die von der zu untersuchenden Materialprobe ausgestrahlte Fluoreszenz in einem Polychromator bzw. einem Gitterspektrographen bündeln. Das im Spektrographen in seine einzelnen Wellenlängen zerlegte Fluoreszenzlicht wird dann auf eine CCD-Kamera, insbesondere I-CCD, gelenkt, in welcher die Intensität der einzelnen Wellenlängen bestimmt und vorzugsweise mittels einem Rechner bzw. einer Datenverarbeitungsanlage verarbeitet und speichert. Die so mittels der CCD-Kamera bestimmten und gespeicherten Fluoreszenzpunkte können nun auf einfache Weise im Rechner mit gespeicherten Standardwerten verglichen und bestimmt werden.

Die erfindungsgemäße Vorrichtung zeichnet sich nun dadurch aus, dass zwischen der zu testenden Materialprobe und der CCD-Kamera ein Sperrelement angeordnet ist, welches den Durchtritt der energiereichen Anregungsstrahlung zur CCD-Kamera verhindert. Durch das in der erfindungsgemäßen Anordnung vorliegende Sperrelement wird sichergestellt, dass kein Licht der Strahlenquelle in die CCD-Kamera gelangt. Dieses Sperrelement verhindert auch, dass Streulicht der Anregungsstrahlung in die CCD-Kamera gelangt und dabei nicht nur die Messung verfälschen sondern diese hochempfindliche Kamera auch zerstören kann. Dabei soll das erfindungsgemäß verwendete Sperrelement bei den Anregungswellenlängen nicht selbst fluoreszieren, und dadurch gemessene Fluoreszenzwerte verfälschen.

Als Sperrelement sind sämtliche Vorrichtungen geeignet, welche eine bestimmte Wellenlänge ablenken, reflektieren oder absorbieren. Eine einfachste Ausführung ist beispielsweise ein optisches Gitter, wie dies im Polychromator bzw. Spektrographen selbst vorliegt. In einer weiteren erfindungsgemäß bevorzugten Ausführungsform umfasst das Sperrelement einen wellenspezifischen Filter, insbesondere einen Mehrschichtenfilter, bei dem eine Doppelschicht oder mehrere Spiegelschichten aufgetragen sind, welche die jeweilige Wellenlänge auslöschen oder reflektieren. Ein besonders bevorzugter Filter ist ein dielektrischer Dünnschichtfilter.

Es hat sich gezeigt, dass es mit derartigen Filtern möglich ist, auch Fluoreszenzen zu bestimmen, welche nahe der Anregungswellenlänge auftreten. Derartige Fluoreszenzen sind insbesondere bei der Photolithographie fatal, da diese aufgrund ihrer Nähe zur Anregungswellenlänge genau so wie diese einen Photolack belichten können und damit die Schärfe bzw. den Kontrast eines aufprojizierten Schaltungsmusters merklich verringern können.

Mit dem erfindungsgemäßen Verfahren ist es daher möglich, bei der Herstellung von optischen Vorrichtungen nicht nur frühzeitig diejenigen optischen Materialen von der Weiterbearbeitung auszuschließen, welche eine hohe nicht-intrinsische Fluoreszenz aufweisen, sondern auch diejenigen, die eine Fluoreszenz nahe der Anregungswellenlänge zeigen.

Die erfindungsgemäß bestimmten optischen Materialien eignen sich besonders zur Herstellung von optischen Komponenten in der DUV-Lithographie, sowie zur Herstellung von mit Photolack beschichteten Wafern und somit zur Herstellung von elektronischen Geräten. Die Erfindung betrifft daher auch die Verwendung der mittels dem erfindungsgemäßen Verfahren und/oder in der erfindungsgemäßen Vorrichtung erhaltenen Materialien zur Herstellung von Linsen, Prismen, Lichtleitstäben, optischen Fenstern sowie optischen Geräten für die DUV-Lithographie, insbesondere zur Herstellung von Steppern und Excimerläsern und somit auch zur Herstellung von integrierten Schaltungen, Computerchips sowie elektronischer Geräte wie Computern sowie anderer Geräte, welche chipartige integrierte Schaltungen enthalten.

## Patentansprüche

1. Verfahren zur Bestimmung der Eignung eines optischen Materials für die Herstellung von optischen Elementen, insbesondere zur Durchstrahlung mit energiereichem Licht, bei dem eine strahlungsinduzierte Absorption im optischen Material dadurch ermittelt wird, dass es mit einer Anregungsstrahlung bestrahlt und die durch diese Bestrahlung induzierte aus intrinsischen und nicht-intrinsischen Anteilen bestehende Gesamtfluoreszenz bestimmt wird, wobei als Fluoreszenz die nicht-intrinsische Fluoreszenz während und/oder unmittelbar nach der Bestrahlung bestimmt wird,
**dadurch gekennzeichnet, dass** das Material vor der Bestimmung mit einer Laserstrahlung bis zur Sättigung des rapid damage vorbestrahlt wird.

2. Verfahren nach Anspruch 1, **dadurch gekennzeichnet, dass** zusätzlich die intrinsische Fluoreszenz bestimmt und aus dem Verhältnis von intrinsischer zu nicht-intrinsischer Fluoreszenz die Eignung des Materials ermittelt wird.

3. Verfahren nach einem der vorhergehenden Ansprüche, **dadurch gekennzeichnet, dass** die Bestrahlung mittels eines Laserimpulses erfolgt.

4. Verfahren nach einem der vorhergehenden Ansprüche, **dadurch gekennzeichnet, dass** die Bestimmung der Fluoreszenz mittels einer I-CCD-Kamera erfolgt.

5. Verfahren nach einem der vorhergehenden Ansprüche, **dadurch gekennzeichnet, dass** die Bestimmung mittels eines Gitter-Spektrographen erfolgt.

6. Verfahren nach einem der vorhergehenden Ansprüche, **dadurch gekennzeichnet, dass** vor Bestimmung der Fluoreszenz die Wellenlänge der Anregungsstrahlung mittels einer geeigneten Vorrichtung ausgeblendet wird.

7. Verfahren nach Anspruch 6, **dadurch gekennzeichnet, dass** die Vorrichtung ein Filter und/oder ein Spektralgitter ist.

8. Verfahren nach einem der vorhergehenden Ansprüche, **dadurch gekennzeichnet, dass** die Bestimmung der Fluoreszenz innerhalb der Abklingzeit der nicht-intrinsischen Fluoreszenz nach der Bestrahlung des optischen Materials erfolgt.

9. Verfahren nach einem der vorhergehenden Ansprüche, **dadurch gekennzeichnet, dass** das optische Material CaF₂, BaF₂, SrF₂, LiF, NaF, MgF₂ und/oder KMgF₃ ist.

10. Verfahren nach einem der vorhergehenden Ansprüche, **dadurch gekennzeichnet, dass** bei Auftreten einer intrinsischen Fluoreszenzbande diese zur Normierung der nicht-intrinsischen Fluoreszenzbanden verwendet wird.

11. Vorrichtung zur Durchführung des Verfahrens nach einem der Ansprüche 1 - 10, umfassend eine Quelle zur Aussendung einer einen Strahlengang definierenden Anregungsstrahlung, eine Halterung für eine im Strahlengang angeordnete zu bestimmende Materialprobe, sowie eine außerhalb des Strahlengangs angeordnete Einrichtung zur Bestimmung einer durch die Anregungsstrahlung in der Materialprobe induzierten Fluoreszenz, **dadurch gekennzeichnet, dass** zwischen der Probe und der Einrichtung zur Bestimmung der Fluoreszenz ein wellenlängenspezifischer Filter angeordnet ist.

12. Verwendung des mit dem Verfahren nach einem der Ansprüche 1 - 10 bestimmten oder mittels der Vorrichtung nach Anspruch 11 bestimmten optischen Materials zur Herstellung von Linsen, Prismen, Lichtleitstäben, optischen Fenstern, optischen Komponenten für die DUV-Photolithographie, Steppern, Excimerlasern, Wafern, Computerchips, sowie integrierten Schaltungen und elektronischen Geräten, die solche Schaltungen und Chips enthalten.

## Claims

1. Method for determining the suitability of an optical material for the production of optical elements, in particular for the transillumination with high-energy light, in which radiation-induced absorption in the optical material is established by virtue of the latter being irradiated by excitation radiation and the overall fluorescence, which consists of intrinsic and non-intrinsic components and which is induced by this irradiation, being determined, wherein the non-intrinsic fluorescence during and/or directly after the radiation is determined as fluorescence, **characterized in that** the material is irradiated in advance by laser radiation up to the saturation of the rapid damage prior to this determination.

2. Method according to Claim 1, **characterized in that** the intrinsic fluorescence is additionally determined and the suitability of the material is established from the ratio of intrinsic to non-intrinsic fluorescence.

3. Method according to one of the preceding claims, **characterized in that** the irradiation is carried out by means of a laser pulse.

4. Method according to one of the preceding claims, **characterized in that** the fluorescence is determined by means of an ICCD camera.

5. Method according to one of the preceding claims, **characterized in that** the determination is carried out by means of a grating spectrograph.

6. Method according to one of the preceding claims, **characterized in that** the wavelength of the excitation radiation is masked by means of a suitable device prior to determining the fluorescence.

7. Method according to Claim 6, **characterized in that** the device is a filter and/or a spectral grating.

8. Method according to one of the preceding claims, **characterized in that** the fluorescence is determined within the decay time of the non-intrinsic fluorescence after the irradiation of the optical material.

9. Method according to one of the preceding claims, **characterized in that** the optical material is CaF₂, BaF₂, SrF₂, LiF, NaF, MgF₂ and/or KMgF₃.

10. Method according to one of the preceding claims, **characterized in that**, if an intrinsic fluorescence band occurs, it is used to normalize the non-intrinsic fluorescence bands.

11. Device for carrying out the method according to one of Claims 1-10, comprising a source for emitting excitation radiation defining a beam path, a holder for a material sample to be determined, which is arranged in the beam path, and an apparatus, arranged outside of the beam path, for determining fluorescence induced by the excitation radiation in the material sample, **characterized in that** a wavelength-specific filter is arranged between the sample and the apparatus for determining the fluorescence.

12. Use of the optical material determined with the method according to one of Claims 1-10 or determined by means of the device according to Claim 11 for producing lenses, prisms, light-guiding rods, optical windows, optical components for DUV photolithography, steppers, excimer lasers, wafers, computer chips, and integrated circuits and electronic appliances which contain such circuits and chips.

## Revendications

1. Procédé de détermination de l'aptitude d'un matériau optique pour la fabrication d'éléments optiques, notamment destinés à être traversés par un rayonnement de lumière à grande énergie, avec lequel une absorption induite par le rayonnement dans le matériau optique est déterminée en ce qu'il est irradié avec un rayonnement d'excitation et la fluorescence totale induite par cette irradiation, composée de parts intrinsèques et non intrinsèques, est déterminée, la fluorescence déterminée étant la fluorescence non intrinsèque pendant et/ou immédiatement après l'irradiation, **caractérisé en ce qu'**avant la détermination, le matériau est préalablement irradié avec un rayonnement laser jusqu'à la saturation du dommage rapide.

2. Procédé selon la revendication 1, **caractérisé en ce que** la fluorescence intrinsèque est en plus déterminée et l'aptitude du matériau est déterminée à partir du rapport des fluorescences intrinsèques et non intrinsèques.

3. Procédé selon l'une des revendications précédentes, **caractérisé en ce que** l'irradiation est effectuée au moyen d'une impulsion laser.

4. Procédé selon l'une des revendications précédentes, **caractérisé en ce que** la détermination de la fluorescence est effectuée au moyen d'une caméra I-CCD.

5. Procédé selon l'une des revendications précédentes, **caractérisé en ce que** la détermination est effectuée au moyen d'un spectrographe à prisme.

6. Procédé selon l'une des revendications précédentes, **caractérisé en ce qu'**avant la détermination de la fluorescence, la longueur d'onde du rayonnement d'excitation est masquée au moyen d'un dispositif approprié.

7. Procédé selon la revendication 6, **caractérisé en ce que** le dispositif est un filtre et/ou un prisme spectral.

8. Procédé selon l'une des revendications précédentes, **caractérisé en ce que** la détermination de la fluorescence est effectuée durant le temps de décroissance de la fluorescence non intrinsèque après l'irradiation du matériau optique.

9. Procédé selon l'une des revendications précédentes, **caractérisé en ce que** le matériau optique est du CaF₂, du BaF₂, du SrF₂, du LiF, du NaF, du MgF₂ et/ou du MgF₃.

10. Procédé selon l'une des revendications précédentes, **caractérisé en ce que** lorsqu'il se produit une bande de fluorescence intrinsèque, celle-ci est utilisée pour la normalisation des bandes de fluorescence non intrinsèques.

11. Dispositif pour mettre en oeuvre un procédé selon l'une des revendications 1 à 10, comprenant une source pour émettre un rayonnement d'excitation définissant un trajet de rayon, un support pour un échantillon de matériau à déterminer disposé dans le trajet de rayon, ainsi qu'un appareil disposé à l'extérieur du trajet de rayon et destiné à déterminer une fluorescence induite dans l'échantillon de matériau par le rayonnement d'excitation, **caractérisé en ce qu'**un filtre à longueur d'onde spécifique est disposé entre l'échantillon et l'appareil destiné à déterminer la fluorescence.

12. Utilisation du matériau déterminé avec le procédé selon l'une des revendications 1 à 10 ou au moyen du dispositif selon la revendication 11 pour fabriquer des lentilles, des prismes, des barreaux de guidage de lumière, des fenêtres optiques, des composants optiques pour la photolithographie DUV, des photorépéteurs, des lasers excimer, des galettes, des puces d'ordinateur ainsi que des circuits intégrés et des appareils électroniques qui contiennent de tels circuits et puces.
